# NEW EUROPEAN PATENT SPECIFICATION

(11) **EP 1 358 010 B2**
(45) Date of publication and mention of the opposition decision: **23.07.2008**
(45) Mention of the grant of the patent: 06.10.2004
(21) Application number: 02724162.9
(22) Date of filing: 08.02.2002
(51) Int. Cl.: B01J 35/06

(54) **THREE-DIMENSIONAL CATALYST GAUZES KNITTED IN TWO LAYERS**
DREIDIMENSIONALE, IN ZWEI SCHICHTEN GESTRICKTE KATALYSATORNETZE
GAZES CATALYTIQUES TRIDIMENSIONNELLES TRICOTEES EN DEUX COUCHES

(30) Priority: 08.02.2001 DE 10105624; 15.02.2001 US 268718 P
(43) Date of publication of application: 05.11.2003
(73) Proprietor: Umicore AG & Co. KG, 63457 Hanau-Wolfgang (DE)
(72) Inventor: NEUMANN, Jürgen, 63594 Hasselroth (DE); KÖNIGS, Dietmar, 63571 Gelnhausen (DE); STOLL, Thomas, 72762 Reutlingen (DE); GÖLITZER, Hubertus, 63755 Alzenau (DE)
(74) Representative: Vossius & Partner
(86) International application number: PCT/EP2002/001364
(87) International publication number: WO 2002/062466

(56) References cited:
- EP-A- 0 504 723
- EP-A- 0 680 787
- DE-A- 4 423 714
- FR-A- 771 524
- US-A- 4 045 847
- US-A- 4 181 514
- US-A- 4 787 219
- US-A- 5 699 680
- US-A- 6 073 467
- US-A- 6 089 051

## Description

The present invention relates to catalyst gauzes. More particularly, it relates to three-dimensional catalyst gauzes that may be used in gas reactions.

Gas reactions catalyzed by noble metals, such as the oxidation of ammonia with atmospheric oxygen in the production of nitric acid (Ostwald process) or the reaction of ammonia with methane in the presence of oxygen to produce hydrocyanic acid (Andrussow process) have been important to industry for a long time. These heterogeneously catalyzed gas reactions provide the basic chemicals for the chemical industry and for fertilizer production.

The reactions typically proceed on or in a gas-permeable spatial structure of a noble metal catalyst. Gauzes in the form of woven fabrics or knitted fabrics of fine noble metal wires have been used in these reactions as noble metal catalysts and may be refered to as "catalyst gauzes". Traditionally, the "noble metal wires" of these catalyst gauzes have been made predominantly of platinum, rhodium or of alloys of these metals with other noble or base metals. Platinum-rhodium alloys with 4 to 12 wt.% rhodium and platinum-palladium-rhodium alloys with 4 to 12 wt.% palladium and rhodium are typical. Palladium-nickel alloys with 2 to 15 wt.% nickel, palladium-copper alloys with 2 to 15 wt.% copper and palladium-nickel-copper alloys with 2 to 15 wt.% nickel and copper may also be employed.

Typically, the catalyst gauzes are arranged in the reaction zone of a flow reactor in a plane perpendicular to the direction of flow of the gas mixture. They may also be organized in conical arrangements. Further, several gauzes may be arranged in series, one behind the other, and combined to form what is referred to as a "catalyst pack". Usually associated with the catalyst pack are platinum-collecting gauzes, also known as "getter gauzes", which are conventionally arranged downstream of the actual catalyst gauzes. Getter gauzes recover platinum and rhodium convectively discharged from the catalyst gauzes in the form of gaseous oxides with the reaction gas stream. These getter gauzes are usually made of wires of palladium or palladium alloys. The use of catalyst packs and getter gauzes is well known to persons skilled in the art.

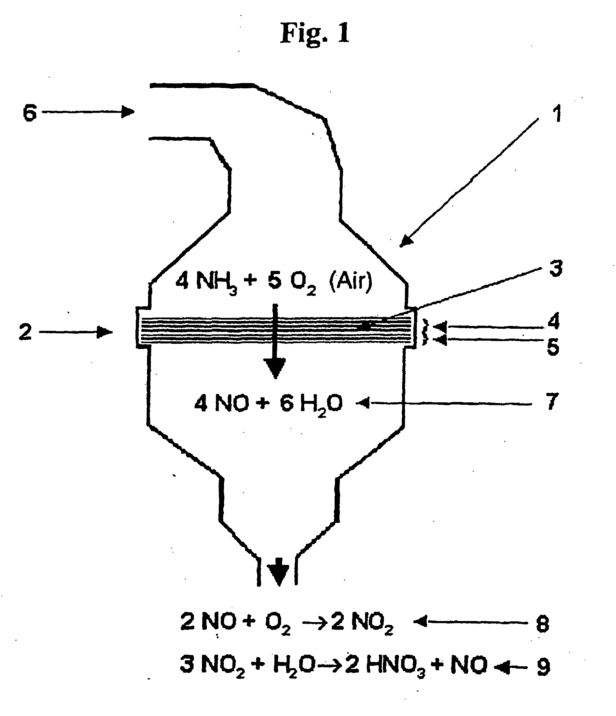

**Figure 1** shows a representation of a reactor that is catalytically oxidizing ammonia and uses a catalyst pack and getter gauzes. In this figure, the reaction zone (2) of the flow reactor (1), the catalyst pack (3), which comprises several catalyst gauzes (4) in series and downstream getter gauzes (5), is arranged in a plane perpendicular to the direction of flow. The ammonia/atmospheric oxygen mixture (with an ammonia content of 9 - 13 vol.%) (6) flows through the catalyst pack under atmospheric or increased pressure. Ignition of the gas mixture takes place in the entry region, and the combustion reaction yields nitrogen monoxide (NO) and water (7) involving the entire catalyst pack. The NO in the reaction gas mixture (7) flowing out, subsequently reacts with the excess atmospheric oxygen to yield NO₂ (8), which forms nitric acid with water in a downstream absorption (9). The product may be fed, for example, to fertilizer production.

Both knitted noble metal catalyst gauzes and woven catalyst gauzes are well known to persons skilled in the art. However, knitted noble metal catalyst gauzes have a number of advantages over woven catalyst gauzes, and for this reason they are currently preferred for industrial uses. First, knitted catalysts can be produced more economically, since shorter set-up times are achieved with the knitting technique than with the weaving technique. This causes a considerably reduced binding of noble metal in production. For example, under the flat bed knitting technique, which is well known to persons skilled in the art, the knitted gauzes are individually produced and tailored to specific shapes and dimensions. By contrast, woven gauzes need to be cut out from finished webs, which produces expensive waste. The knitting technique also offers the possibility of a high flexibility with respect to the knitting pattern, wire thicknesses and resulting weight per unit area.

Second, one can produce a catalytically more effective product through the use of knitted catalyst gauzes because one can form three-dimensionally knitted catalyst gauzes. These catalyst gauzes prove to be more effective because of their more complex spatial structure. This applies above all to three-dimensional catalyst gauzes knitted in two or more layers, which are described in EP 0 680 787, and in which the meshes of the individual layers are joined to one another by pile threads.

Nevertheless, known three-dimensionally knitted catalyst gauzes are in need of improvement with respect to catalytic activity, selectivity of the reaction catalyzed, amount of noble metal employed, mechanical strength, service life and unavoidable loss of noble metal. In addition to these economic requirements, improvements are needed in order to render processes in which they are used more environmentally friendly and more ecological. In other words, it is desirable to reduce the N₂O emissions arising on the catalyst gauzes. In order to obtain a complete conversion of ammonia, an adequate residence time of the reaction gas in the catalyst pack and a corresponding porosity of the catalyst pack are necessary. The complete conversion of ammonia in the Ostwald process is absolutely necessary, since ammonium nitrites and nitrates, which are an explosion hazard, can form if unreacted ammonia passes through the catalyst pack. The mechanical stability of the catalyst gauzes must furthermore be ensured with respect to the required service life.

On the basis of these basic requirements of the catalyst gauze and catalyst pack, there are a given minimum number of catalyst gauzes and a minimum wire thickness thereof that predetermine the minimum amount of noble metal employed. However, the weight per unit area of the gauzes cannot be reduced as desired, for example by reducing the wire thickness, since this would have an adverse effect on the mechanical strength and the service life of the gauzes. A reduction in the processed wire length would result in a widening of the mesh width in the catalyst gauzes that are conventional nowadays, which in turn would increase the proportion of unreacted ammonia that passes through as this gauze layer is increased. A reduced reactivity of such gauzes furthermore leads to an increased formation of N₂O, especially in the start-up phase of the reactor.

The present invention was therefore based on the object of further increasing the catalytic activity and efficiency of noble metal catalyst gauzes for gas reactions such that it would be possible to manage with a lower total amount of noble metal employed, for example by reducing the number of gauzes and/or the length of the wire processed in the catalyst gauze and/or the wire thickness thereof, without thereby having to accept disadvantages with respect to the yield and selectivity of the gas reaction, mechanical strength and service life of the gauzes and unavoidable loss of noble metal.

The present invention refers to a knitted catalyst gauze comprising
a. two mesh layers of knitted noble metal wires;
b. pile threads, wherein said pile threads join the two mesh layers to each other; and
c. weft threads, wherein said weft threads are located between said two mesh layers that are joined by said pile threads;
wherein said pile threads and weft threads comprise noble metal wires. The catalyst gauzes of the present invention can be used for carrying out heterogeneously catalyst gas reactions, for oxidizing ammonia with atmospheric oxygen to produce nitric acid, and for reacting ammonia with methane in the presence of oxygen to produce hydrocyanic acid.

The present invention provides three-dimensional catalyst gauzes for gas reactions knitted in two or more layers from noble metal wires in which weft threads are inserted between the mesh layers. The mesh layers are joined by pile threads.

The mesh layers, pile threads and weft layers all comprise wires that comprise noble metals, which may be referred to as "noble metal wires".

The present invention also provides processes for making the aforementioned catalyst gauzes.
**Figure 1** is a representation of a reactor that catalytically oxidizes ammonia.
**Figure 2** is a representation of a section from a knitted catalyst gauze according to one embodiment of the present invention.

The present invention relates to three-dimensional catalyst gauzes for gas reactions knitted in two or more layers from noble metal wires. The individual layers comprise meshes that are joined to one another by pile threads, and weft threads that are inserted between the mesh layers. The phrase "mesh layer" refers to a mesh of knitted noble metal wires.

The present invention will now be described in connection with preferred embodiments. These embodiments are presented to aid in an understanding of the present invention and are not intended, and should not be construed, to limit the invention which is defined by the appended claims. Further, this disclosure is not intended to be a treatise on catalysts. Readers are referred to appropriate available texts on this subject for additional information as necessary.

The basic structure of the catalyst gauzes of the present invention corresponds to the three-dimensional catalyst gauzes knitted in two or more layers described in EP 0 680 787.

In these gauzes, the individual mesh layers, which comprise mesh threads, are joined to one another by pile threads. Up to ten pile threads per mesh can be present here, the pile threads being aligned at an angle of 0° to 50° to the direction of flow of the reaction gases (corresponding to 90° to 40° to the plane of the gauze). The pile threads typically have a length of from 1 mm to 10 mm. Corresponding two-layer knitted fabrics have a thickness of from 1.0 mm to 3.0 mm and a weight per unit area of from 1000 g/m² to 3000 g/m².

The weft threads are located between the mesh layers. The weft threads can be inserted between the mesh layers in several planes. Methods for inserting weft threads are well known to persons skilled in the art. The weft threads are preferably arranged approximately centrally between two mesh layers, and are typically arranged here unidirectionally in the planes. They are also preferably arranged approximately parallel to one another and are aligned in their direction perpendicular to the direction of the meshes in the mesh layers. Further, the weft threads are preferably inserted into the pile threads, which join the mesh layers and are fixed by them. The weft threads can also be constructed as multiple wires.

The knitted catalyst gauzes according to the present invention typically have a number of weft threads per mesh corresponding to their wire properties. The preferred number will readily be determinable by one skilled in the art upon reading this disclosure, based on the particular catalyst gauze that is being used and the application in which it is being used.

The weft threads are made from the same type wire material as the mesh and pile threads, namely preferably of platinum-rhodium alloy with from 4 wt.% to about 12 wt.% rhodium and platinum-palladium-rhodium alloys with from 4 wt. wt.% to 12 wt.% palladium and rhodium. Typical such alloys are PtRh5, PtRh8 and PtRh10.

Preferably, wires that have a diameter of from 0.05 mm to 0.120 mm and that have a tensile strength of from 900 N/mm² to 1050 N/mm² and an elongation limit of from 0.5 to 3% are employed for knitting the gauzes according to the present invention. The production of wires from corresponding noble metal alloys by linear cold forming is well known to persons skilled in the art. Such wires can be processed without auxiliaries on flat bed knitting machines in accordance with EP 0 504 723.

In the knitted catalyst gauzes of the present invention, the mesh threads, pile threads and weft threads can have thicknesses that differ from one another. Typically, independent of one another, the mesh threads have wire diameters from 0.06 mm to 0.092 mm, the pile threads have wire diameters from 0.06 mm to 0.092 mm and the weft threads have wire diameters from 0.06 mm to 0.092 mm.

In the knitted catalyst gauzes according to the present invention, the mesh threads, pile threads and weft threads can be reduced in minimum wire thickness by up to 15%. The wire length processed in the mesh and pile threads can in each case be reduced here by up to 50%. Of the amount of noble metal saved as a result, at least 40% is inserted into the catalyst gauze in the form of weft threads. No disadvantages arise with respect to yield and selectivity of the gas reaction, mechanical strength and service life of the gauzes and unavoidable loss of noble metal.

The knitted catalyst gauzes made in accordance with the present invention can be produced on commercially available industrial flat bed knitting machines (*e.g*., from Stoll, Reutlingen, type CSM 440 TC) by running a weft thread guide between the mesh thread guide and the pile thread guide. In accordance with EP 0 504 723, the settings on the flat bed knitting machines are preferably between 3.63 and .81 mm with respect to gauge and between 2 and 6 mm for the mesh length.

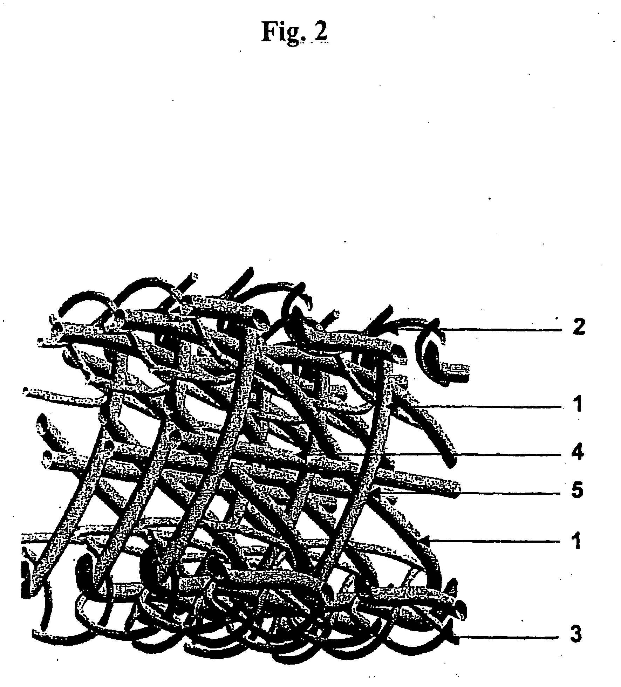

**Figure 2** shows a magnified diagram of a section from a knitted catalyst gauze according to the present invention. In the figure, the pile and weft threads are represented with a larger wire thickness than the mesh thread for visual illustration of the structure of the gauze geometry. The figure shows a catalyst gauze of two mesh layers (2), (3) joined to one another by pile threads (1), into which weft wires (4) arranged approximately parallel to one another are inserted as single wires approximately centrally between the mesh layers (2), (3). The weft wires (4) are fixed in the crossing points (5) of the pile threads (1) and form a further catalytically active plane approximately centrally between the mesh layers (2), (3).

By introducing the weft wires, an additional dense noble metal wire plane is inserted into the three-dimensional spatial structure of the knitted fabric at the pile threads that cross over each other, which causes the rate of reaction in the catalyst gauze to increase. The weft wires are fixed by the pile threads that cross over each other, so that further stabilization of these wires by linking via the formation of meshes is unnecessary. Compared with a corresponding catalyst gauze that is structured in one layer, this involves a significantly lower amount of noble metal due to the plane formed by the weft wires.

It is found that the knitted catalyst gauzes according to the present invention have a significantly higher catalytic activity than conventional three-dimensional catalyst gauzes knitted in two or more layers (corresponding to EP 0 680 787) into which no weft wires are inserted. Gas reactions can thus be operated either with a lower number of catalyst gauze layers in the catalyst pack and/or with gauzes made of noble metal wires of shorter processing length or smaller thickness, depending on whether they are conducted under atmospheric pressure or under higher pressure. This results in a significantly lower total amount of noble metal employed. The reduction in the amount of noble metal employed is between about 15 and about 30%.

The advantageous nature of the catalyst gauzes according to the present invention also manifests itself in the ignition properties of the catalyst pack and during the critical start-up phase of the reaction. As a result of the higher catalyst activity, the ignition temperature is lowered, typically by 20°C to 30°C, and the operating temperature of the catalyst pack of from 800°C to 950°C is therefore reached considerably faster. The time required to achieve a stable reaction is typically reduced by from 20% to 50%. The N₂O emission, in particular in the start-up phase of the reaction, is thus lowered by on average from 15% to 30% and the product yield is increased accordingly.

### Examples

### Example 1:

A research reactor for oxidation of ammonia is operated under conditions typical for medium-pressure plants (pressure: 4.0 bar; operating temperature: 860°C; throughput of ammonia: 0.12 m³/h) in each case with a catalyst pack, diameter 12 mm, of the following configuration:
(a) combination of (conventional, prior art):
   3 catalyst gauzes knitted in one layer of PtRh8; wire thickness 0.076 mm; weight per unit area 600 g/m²
   1 catalyst gauze knitted in two layers of PtRh8; wire thicknesses: mesh thread 0.076 mm, pile thread 0.076 mm; gauze thickness 2.5 mm; weight per unit area 1800 g/m²
(b) combination of (modified according to the invention):
   3 catalyst gauzes knitted in one layer of PtRh8; wire thickness 0.076 mm; weight per unit area 600 g/m²
   1 catalyst gauze according to the invention knitted in two layers of PtRh8; wire thicknesses: mesh thread 0.076 mm, pile thread 0.076 mm, weft thread 0.076 mm; gauze thickness 2.5 mm; weight per unit area 1800 g/m²

The ignition temperature of the catalyst pack modified according to the invention is 230°C and therefore 20 - 30°C below that of the conventional catalyst pack. In the start-up phase of the catalyst pack modified according to the invention, the N₂O emission is lowered by 20%. In both cases, the operating temperatures are established almost immediately after the ignition. While a stationary operating state with constant product distribution is established after the operating temperature is reached with the catalyst gauze according to the invention, this is achieved only after 0.5 to 3.5 hours with the conventional catalyst pack.

### Example 2:

An industrial reactor for oxidation of ammonia is operated under conditions typical for medium-pressure plants (pressure: 6.3 bar; operating temperature: 895°C; throughput of ammonia: 5121 m³/h) with a catalyst pack, diameter 1700 mm, of the following configuration:
(a) combination of (conventional, prior art):
   3 catalyst gauzes knitted in one layer of PtRh5; wire thickness 0.076 mm; weight per unit area 600 g/m²
   4 catalyst gauzes knitted in two layers of PtRh5; wire thickness 0.076 mm; weight per unit area 1800 g/m²
      Total weight of noble metal incorporated 20.5 kg.
(b) combination of (modified according to the invention):
   2 catalyst gauzes knitted in one layer of PtRh5; wire thickness 0.076 mm; weight per unit area 600 g/m²
   3 catalyst gauzes knitted in two layers of PtRh5; wire thickness 0.076 mm; weight per unit area 1800 g/m²
   1 catalyst gauze according to the invention knitted in two layers of PtRh5; wire thicknesses: mesh thread 0.060 mm, pile thread 0.060 mm, weft thread 0.060 mm; gauze thickness 2.55 mm; weight per unit area 1600 g/m²
      Total weight of noble metal incorporated 16.5 kg.

The catalyst pack according to the invention comprises a total of 6 catalyst gauzes, of which 1 is a catalyst gauze according to the invention knitted in two layers with weft threads. The conventional catalyst pack of comparable efficiency comprises 7 gauzes, of which 3 are catalyst gauzes knitted in one layer and 4 are catalyst gauzes knitted in two layers (corresponding to EP 0 680 787). The catalyst gauze according to the invention results in a reduction in the total amount of noble metal employed by 20% from 20.5 kg to 16.5 kg.

The reduction in the amount of noble metal employed by the catalyst gauze according to the invention knitted in two layers is composed as follows:
1 catalyst gauze knitted in one layer with a wire thickness of 0.076 mm and a weight per unit area of 600 g/m² and 1 catalyst gauze knitted conventionally in two layers with a wire thickness of 0.076 mm and a weight per unit area of 1800 g/m² were replaced by 1 catalyst gauze according to the invention knitted in two layers with a wire thickness of 0.060 mm and a weight per unit area of 1600 g/m². The reduction in weight is 1.816 kg (33%), where 1.362 kg (75%) of the weight reduction is to be attributed to the reduction in the number of gauzes in the catalyst pack and 0.454 kg (25%) is to be attributed to the reduction in the wire thickness in the catalyst gauze according to the invention knitted in two layers.

The further saving of 2.184 kg for the total catalyst pack was due to a reduction in the wire thickness and the weight per unit area of 2 of the 3 conventional two-layer catalyst gauzes employed.

The ignition temperature of the catalyst pack cannot be measured in this plant. The operating temperature is reached after approximately 2 minutes. This is about 60% of the start-up time required with conventional catalyst packs. The ammonia conversion after the operating temperature has been reached is complete in both cases.

After an operating period of 4 weeks, a stable yield 1% higher is achieved with the catalyst gauzes according to the invention.

## Claims

1. A knitted catalyst gauze comprising:
a. two mesh layers of knitted noble metal wires;
b. pile threads, wherein said pile threads join the two mesh layers to each other; and
c. weft threads, wherein said weft threads are located between said two mesh layers that are joined by said pile threads;
wherein said pile threads and weft threads comprise noble metal wires.

2. A catalyst gauze according to claim 1, wherein the weft threads are inserted between the mesh layers in more than one plane.

3. A catalyst gauze according to claim 1 or 2, wherein the weft threads are arranged approximately centrally between the two mesh layers.

4. A catalyst gauze according to any of claims 1 to 3, wherein the weft threads are arranged approximately parallel to one another and are aligned in their direction perpendicular to the direction of the meshes in the mesh layers.

5. A catalyst gauze according to claim 1, wherein the weft threads are inserted into the pile threads.

6. A catalyst gauze according to any of claims 1 to 5, wherein the mesh threads have wire diameters of from 0.06 to 0.092 mm, the pile threads have wire diameters of from 0.06 to 0.092 mm and the weft threads have wire diameters of from 0.06 to 0.092 mm.

7. A catalyst gauze according to any of claims 1 to 6, wherein up to ten pile threads per mesh are present and the pile threads are aligned at an angle of from 0 to 50° to the direction of flow of the reaction gases.

8. A catalyst gauze according to any of claims 1 to 7 in which the thickness of the two mesh layers is from 1.0 to 3.0 mm and the weight per unit area is from 1000 to 3000 g/m².

9. A catalyst gauze according to any of claims 1 to 8 wherein the mesh layers comprise mesh threads and the mesh threads comprise a platinum-rhodium alloy with 4 wt.% to 12 wt.% rhodium or a platinum-palladium-rhodium alloy with 4 wt.% to 12 wt.% palladium and rhodium.

10. A catalyst gauze according to any of claims 1 to 9, wherein the pile threads comprise a platinum-rhodium alloy with 4 wt.% to 12 wt.% rhodium or a platinum-palladium-rhodium alloy with 4 wt.% to 12 wt. % palladium and rhodium.

11. A catalyst gauze according to any of claims 1 to 10, wherein the weft threads comprise a platinum-rhodium alloy with 4 wt.% to 12 wt.% rhodium or a platinum-palladium-rhodlum alloy with 4 wt.% to 12 wt. % palladium and rhodium.

12. A process for the production of a three-dimensional catalyst gauze according to any of claims 1 to 11 comprising knitting noble metal wires in two layers on a flat bed knitting machine, wherein a weft thread guide is run between a mesh thread guide and a pile thread guide.

13. A process according to claim 12, wherein said wires have a diameter of from 0.05 mm to 0.120 mm, a tensile strength of from 900 N/mm² to 1050 N/mm² and an elongation limit of from 0.5 % to 3%.

14. A process according to claim 12 or 13, wherein on the flat bed knitting machine are settings between 3.63 and 1.81 mm with respect to gauge and between 2 and 6 mm for the mesh length.

15. Use of the catalyst gauze of any of claims 1 to 11 for carrying out heterogeneously catalyzed gas reactions.

16. Use of the catalyst gauze of any of claims 1 to 11 for oxidizing ammonia with atmospheric oxygen to produce nitric acid.

17. Use of the catalyst gauze of any of claims 1 to 11 for reacting ammonia with methane in the presence of oxygen to produce hydrocyanic acid.

## Patentansprüche

1. Gestricktes Katalysatometz, umfassend:
a. zwei Maschenlagen aus gestrickten Edelmetalldrähten;
b. Polfäden, wobei die Polfäden die zwei Maschenlagen miteinander verbinden; und
c. Schussfäden, wobei die Schussfäden sich zwischen den zwei Maschenlagen, die durch die Polfäden verbunden sind, befinden;
wobei die Polfäden und Schussfäden Edelmetalldrähte umfassen.

2. Katalysatornetz nach Anspruch 1, wobei die Schussfäden in mehr als einer Ebene zwischen den Maschenlagen eingelegt sind.

3. Katalysatornetz nach Anspruch 1 oder 2, wobei die Schussfäden in etwa mittig zwischen den zwei Maschenlagen angeordnet sind.

4. Katalysatornetz nach einem der Ansprüche 1 bis 3, wobei die Schussfäden in etwa parallel zueinander angeordnet sind und in ihrer Richtung senkrecht zu der Richtung der Maschen in den Maschenlagen ausgerichtet sind.

5. Katalysatornetz nach Anspruch 1, wobei die Schussfäden in die Polfäden eingelegt sind.

6. Katalysatornetz nach einem der Ansprüche 1 bis 5, wobei die Maschenfäden Drahtdurchmesser von 0,06 bis 0,092 mm aufweisen, die Polfäden Drahtdurchmesser von 0,06 bis 0,092 mm aufweisen und die Schussfäden Drahtdurchmesser von 0,06 bis 0,092 mm aufweisen.

7. Katalysatornetz nach einem der Ansprüche 1 bis 6, wobei bis zu zehn Polfäden pro Masche vorhanden sind und die Polfäden in einem Winkel von 0 bis 50° zur Strömungsrichtung der Reaktionsgase ausgerichtet sind.

8. Katalysatornetz nach einem der Ansprüche 1 bis 7, wobei die Dicke der zwei Maschenlagen 1,0 bis 3,0 mm beträgt und das Flächengewicht 1000 bis 3000 g/m² beträgt.

9. Katalysatornetz nach einem der Ansprüche 1 bis 8, wobei die Maschenlagen Maschenfäden umfassen und die Maschenfäden eine Platin-Rhodium-Legierung mit 4 Gew.-% bis 12 Gew.-% Rhodium oder eine Platin-Palladium-Rhodium-Legierung mit 4 Gew.-% bis 12 Gew.-% Palladium und Rhodium umfassen.

10. Katalysatornetz nach einem der Ansprüche 1 bis 9, wobei die Polfäden eine Platin-Rhodium-Legierung mit 4 Gew.-% bis 12 Gew.-% Rhodium oder eine Platin-Palladium-Rhodium-Legierung mit 4 Gew.-% bis 12 Gew.-% Palladium und Rhodium umfassen.

11. Katalysatornetz nach einem der Ansprüche 1 bis 10, wobei die Schussfäden eine Platin-Rhodium-Legierung mit 4 Gew.-% bis 12 Gew.-% Rhodium oder eine Platin-Palladium-Rhodium-Legierung mit 4 Gew.-% bis 12 Gew.-% Palladium und Rhodium umfassen.

12. Verfahren zur Herstellung eines dreidimensionalen Katalysatornetzes nach einem der Ansprüche 1 bis 11, umfassend Stricken von Edelmetalldrähten in zwei Lagen auf einer Flachbettstrickmaschine, wobei ein Schussfadenführer zwischen einem Maschenfadenführer und einem Polfadenführer geführt wird.

13. Verfahren nach Anspruch 12, wobei die Drähte einen Durchmesser von 0,05 mm bis 0,120 mm, eine Zugfestigkeit von 900 N/mm² bis 1050 N/mm² und eine Dehnungsgrenze von 0,5% bis 3% aufweisen.

14. Verfahren nach Anspruch 12 oder 13, wobei die Einstellungen auf der Flachbettstrickmaschine zwischen 3,63 und 1,81 mm bezüglich der Teilung und zwischen 2 und 6 mm bei der Maschenlänge liegen.

15. Verwendung des Katalysatornetzes nach einem der Ansprüche 1 bis 11 zum Durchführen von heterogen katalysierten Gasreaktionen.

16. Verwendung des Katalysatornetzes nach einem der Ansprüche 1 bis 11 zum Oxidieren von Ammoniak mit Luftsauerstoff, um Salpetersäure herzustellen.

17. Verwendung des Katalysatornetzes nach einem der Ansprüche 1 bis 11 zum Umsetzen von Ammoniak mit Methan in der Gegenwart von Sauerstoff, um Blausäure herzustellen.

## Revendications

1. Gaze de catalyseur tricotée comprenant:
a. deux couches de mailles de fils de métal noble tricotés,
b. des fils de poils dans lesquels ces fils de poils relient les deux couches de mailles les unes aux autres, et
c. des fils de trame dans lesquels ces fils de trame sont placés entre les deux couches de mailles reliées par les fils de poils;
lesdits fils de poils et lesdits fils de trame comprenant des fils de métal noble.

2. Gaze de catalyseur selon la revendication 1,
dans laquelle
les fils de trame sont insérés entre les couches de mailles dans plus d'un seul plan.

3. Gaze de catalyseur selon la revendication 1 ou 2,
dans laquelle
les fils de trame sont disposés approximativement au centre entre les deux couches de mailles.

4. Gaze de catalyseur selon l'une quelconque des revendications 1 à 3,
dans laquelle
les fils de trame sont disposés approximativement parallèlement les uns aux autres et sont alignés dans leur direction perpendiculaire à la direction des mailles dans les couches de mailles.

5. Gaze de catalyseur selon la revendication 1,
dans laquelle
les fils de trame sont insérés dans les fils de poils.

6. Gaze de catalyseur selon l'une quelconque des revendications 1 à 5,
dans laquelle
les fils de mailles ont des diamètres du fil de 0,06 à 0,092 mm,
les fils de poils ont des diamètres du fil de 0,06 à 0,092 mm, et
les fils de trame ont des diamètres du fil de 0,06 à 0,092 mm.

7. Gaze de catalyseur selon l'une quelconque des revendications 1 à 6,
dans laquelle
on a jusqu'à dix fils de poils par maille et les fils de poils sont alignés sous un angle de 0° à 50° par rapport à la direction d'écoulement des gaz de réaction.

8. Gaze de catalyseur selon l'une quelconque des revendications 1 à 7,
dans laquelle
l'épaisseur des deux couches de mailles est de 1,0 à 3,0 mm, et le poids par unité de surface est de 1000 à 3000 g/m².

9. Gaze de catalyseur selon l'une quelconque des revendications 1 à 8,
dans laquelle
les couches de mailles comprenant des fils de mailles et les fils de mailles comprenant un alliage de platine-rhodium contenant de 4 % en poids à 12 % en poids de rhodium, ou un alliage de platine-palladium-rhodium contenant de 4 % en poids à 12 % en poids de palladium et de rhodium.

10. Gaze de catalyseur selon l'une quelconque des revendications 1 à 9,
dans laquelle
les fils de poils comprenant un alliage de platine-rhodium contenant de 4 % en poids à 12 % en poids de rhodium, ou un alliage de platine-palladium-rhodium contenant de 4 % en poids à 12 % en poids de palladium et de rhodium.

11. Gaze de catalyseur selon l'une quelconque des revendications 1 à 10,
dans laquelle
les fils de trame comprenant un alliage de platine-rhodium contenant de 4 % en poids à 12 % en poids de rhodium, ou un alliage de platine-palladium-rhodium contenant de 4 % en poids à 12 % en poids de palladium et de rhodium.

12. Procédé de fabrication d' une gaze de catalyseur en trois dimensions selon l'une quelconque des revendications 1 à 11,
comprenant
le tricotage de fils de métal noble en deux couches sur une machine à tricoter à lit plat dans laquelle on fait passer un guide de fils de trame entre un guide de fils de mailles et un guide de fils de poils.

13. Procédé selon la revendication 12,
dans lequel
les fils ont un diamètre de 0,05 mm à 0,120 mm, une résistance en tension de 900 N/mm² à 1050 N/mm² et une limite d'allongement de 0,5 % à 3 %.

14. Procédé selon la revendication 12 ou 13,
dans lequel
sur la machine à tricoter à lit plat, on effectue des réglages compris entre 3,63 et 1,81 mm par rapport au calibre et entre 2 et 6 mm pour la longueur de mailles.

15. Utilisation de la gaze de catalyseur selon l'une quelconque des revendications 1 à 11, pour mettre en oeuvre des réactions gazeuses catalysées de manière hétérogène.

16. Utilisation de la gaze de catalyseur selon l'une quelconque des revendications 1 à 11, pour oxyder de l'ammoniaque par de l'oxygène atmosphérique pour produire de l'acide nitrique.

17. Utilisation de la gaze de catalyseur selon l'une quelconque des revendications 1 à 11, pour faire réagir de l'ammoniaque avec du méthane en présence d'oxygène de manière à produire de l'acide cyanhydrique.
